# EUROPEAN PATENT SPECIFICATION

(11) **EP 2 781 432 B1**
(45) Date of publication and mention of the grant of the patent: **10.05.2017**
(21) Application number: 13167520.9
(22) Date of filing: 13.05.2013
(51) Int. Cl.: B62B 7/14

(54) **Mechanical seat reversing structure of baby stroller**
Mechanische Sitzumkehrstruktur für einen Kinderwagen
Structure mécanique de retournement de siège de poussette d'enfant

(30) Priority: 22.03.2013 CN 201320137127 U
(43) Date of publication of application: 24.09.2014
(73) Proprietor: O'SK Baby & Children Products (Fujian) Co., Ltd., Zhang Zhou City, Fujian (CN)
(72) Inventor: Yao, Fulai, Zhang Zhou City Fujian Province (CN); Lei, Dexiang, Zhang Zhou City Fujian Province (CN); Huang, Jinhai, Zhang Zhou City Fujian Province (CN)
(74) Representative: Hellmich, Wolfgang

(56) References cited:
- EP-A2- 1 764 281
- US-A1- 2011 193 325

## Description

The invention relates to a mechanical seat reversing structure of a baby stroller, which may be used in a baby stroller. A baby stroller according to the preamble part of claim 1 is disclosed in US 2011/193325 A1.

US 2011/193325 A1 discloses a stroller frame with a swivel seat. The front leg and the rear leg each has an upper end pivoted to the pivotally support base. The pivotally support base is formed with an axle hole and a pair of locking positions. The pair of locking positions may be embodied as two recesses or indents which spaced 180° apart from each other. A locking member is associated with the push bar and operatively installed on the stroller for locking the swivel seat in either the forward facing direction or rearward facing direction.

In the prior art, the seat reversing structures of general baby strollers are detachable. When a mother wants to communicate with her baby, she can dismount the seat and then mount it on the frame again in another direction, in this way, the baby can face the mother. In the above seat reversing procedure, it is needed to dismount the seat and mount it to the frame again, which seems inconvenient when the operator holds something in hands. Therefore, it is expected to have a baby stroller, realizing seat reversing without dismounting the seat.

The technical problem which needs to be solved by the invention is to provide a mechanical seat reversing structure of a baby stroller, realizing seat reversing without dismounting the seat.

The following technical solution is adopted in the invention.

A mechanical seat reversing structure of a baby stroller is provided, wherein it comprises a supporting pedestal fixed on a frame of a baby stroller, a supporting stand rotatably connected with the supporting pedestal through a rotating shaft, a locating component for locking the relative position of the supporting pedestal and the supporting stand, a release mechanism for releasing the lock of the locating component, and a reversing pulling bar; the release mechanism comprises a rotor which is sleeved on the rotating shaft and capable of rotating, and a trigger portion for triggering the locating component to release the lock is arranged on the rotor; a reversing gear is connected with the rotating shaft and is in transmission with the rotor through a ratchet wheel structure; and one end of a reversing drawing rope for drawing the rotor to rotate is connected with the rotor and the other end thereof is connected with the reversing pulling bar. The invention further comprises a return spring for returning the rotor on which one section of the reversing drawing rope is wound.

Following improvement measures may be further employed in the invention for solving the technical problem.

The rotor is provided with a stopper which is movable and rotates with the rotor, one part of the stopper extends into a teeth structure of the reversing gear, a stopper spring for returning the stopper is arranged on the rotor, and, the stopper, the stopper spring, the teeth structure and the reversing gear make up the ratchet wheel mechanism.

The locating component comprises locating holes, a slider, a slider spring for returning the slider and a locating spring for enabling a movable locating pin to get into the locating holes; the locating holds are arranged on the supporting stand or an appended structure jointed with the supporting stand, the locating pin is provided in the supporting pedestal, the slider is provided in a slot of the locating pin and one part of the slider extends from the slot under the effect of the slider spring, and the position of the slider is corresponding to the trigger portion; and the locating pin is located in a guide groove of the supporting pedestal.

The part of the slider extending from the slot is provided with a slope, and the trigger portion is provided with a corresponding slope.

There are at least two locating holes.

A groove is arranged on an outer wall of the rotor, the stopper is rotatably connected with a pillar in the groove, and the stopper is in the groove.

The teeth structure consists of at least two teeth.

The rotor is above the reversing gear and the teeth structure is arranged on an upper end face of the reversing gear.

The locating holes are arranged on the appended structure and the appended structure is a circular plate.

There are at least two locating holes, which are provided in a projected circular plane of the rotating shaft in 180 degrees.

The above technical solution achieves the technical effects as follows.

In the mechanical seat reversing structure of the baby stroller of the invention, the seat can be automatically locked. During operation, the lock of the seat can be automatically released, thereby realizing seat reversing; and the seat can be automatically locked again after reversing. During the reversing operation, the operation is simple; the seat can be reversed without being dismounted, which is convenient for the communication between parents and their babies in use.
Fig. 1 is an application diagram of the mechanical seat reversing structure of the baby stroller of the invention;
Fig. 2 is an exploded structure diagram between a frame and the mechanical seat reversing structure of the baby stroller of the invention;
Fig. 3 is an exploded diagram of components of the mechanical seat reversing structure of the baby stroller of the invention;
Fig. 4 is a sectional view of the mechanical seat reversing structure of the baby stroller of the invention;
Fig. 5 is an internal structure diagram of the mechanical seat reversing structure of the baby stroller of the invention;
Fig. 6 and Fig. 7 are working principle diagrams of the mechanical seat reversing structure of the baby stroller of the invention; and
Fig. 8 is an enlarged drawing of a reversing gear.

The invention will be further described in details as below by specific embodiments.

### Embodiment

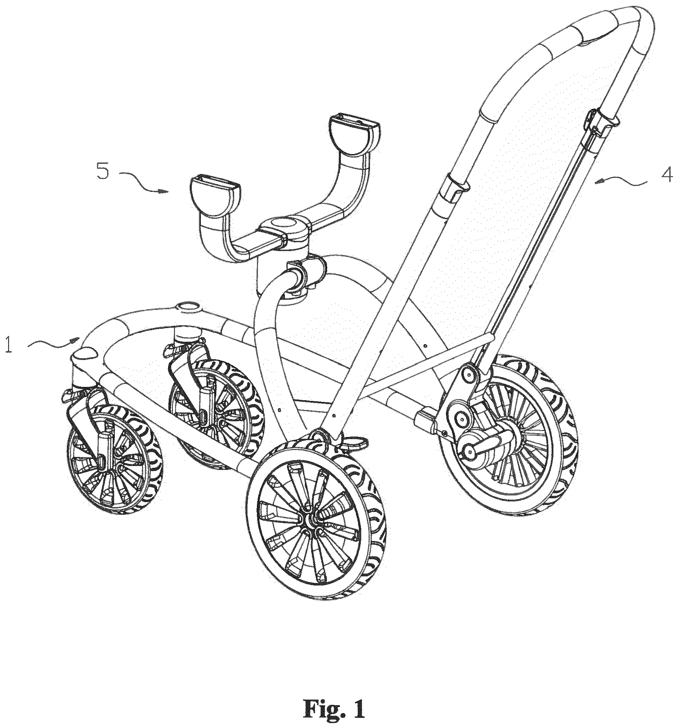

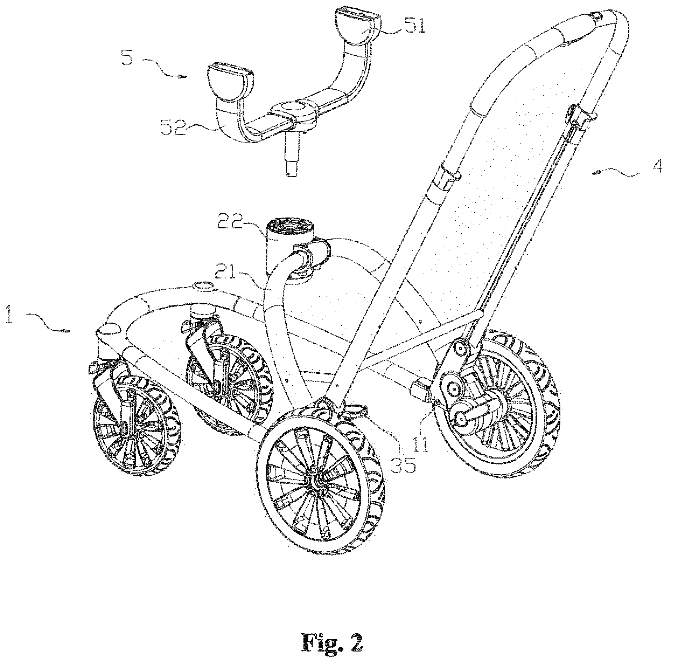

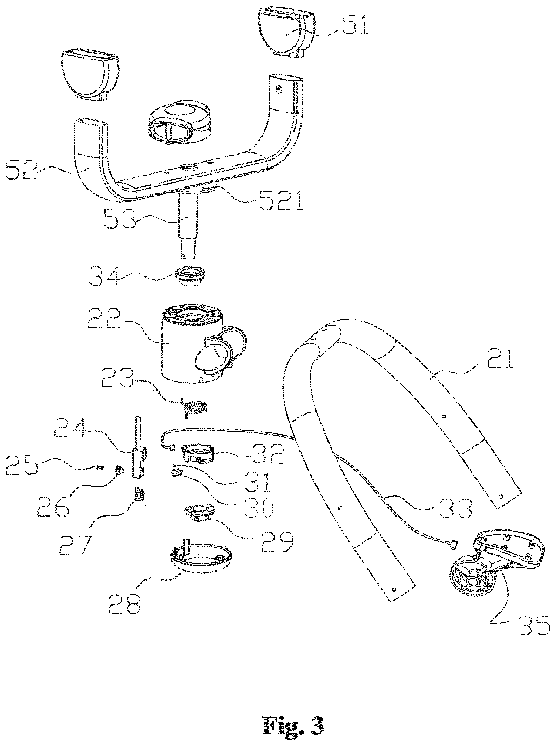

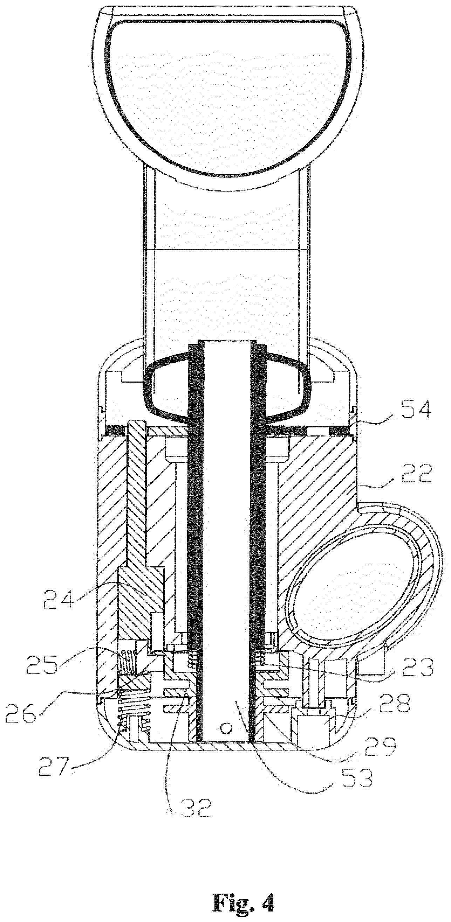

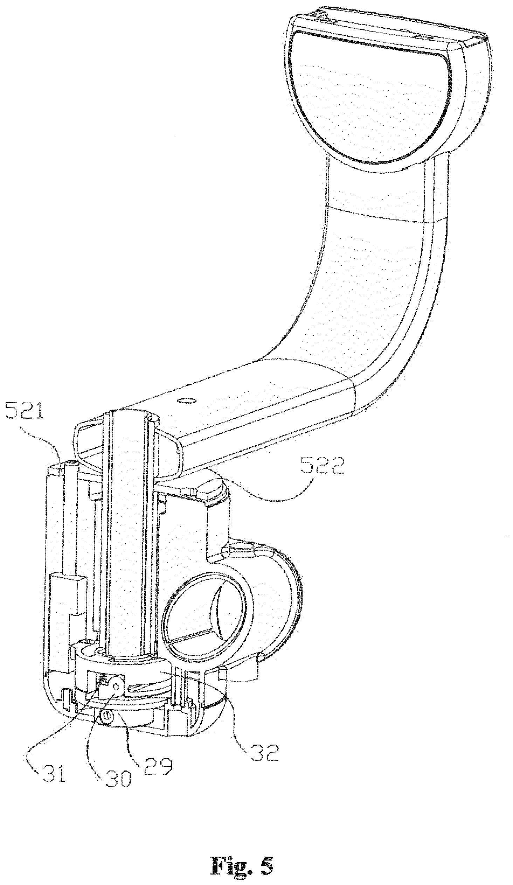

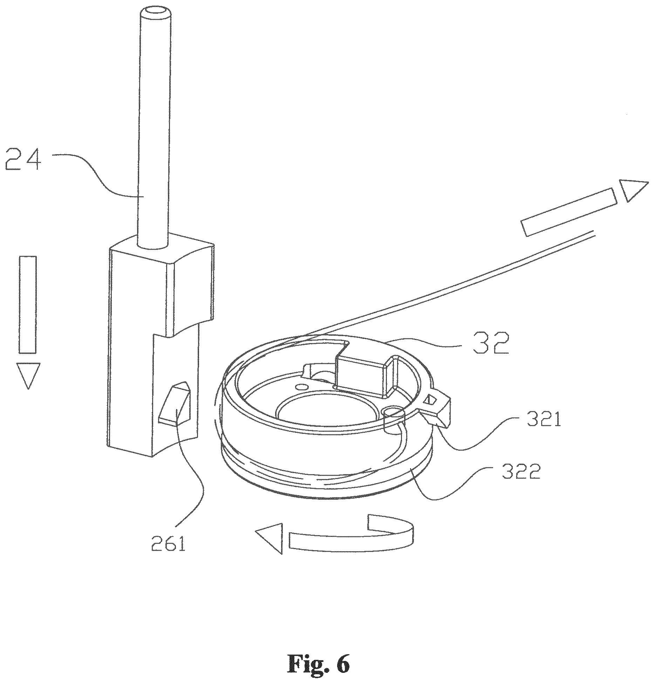

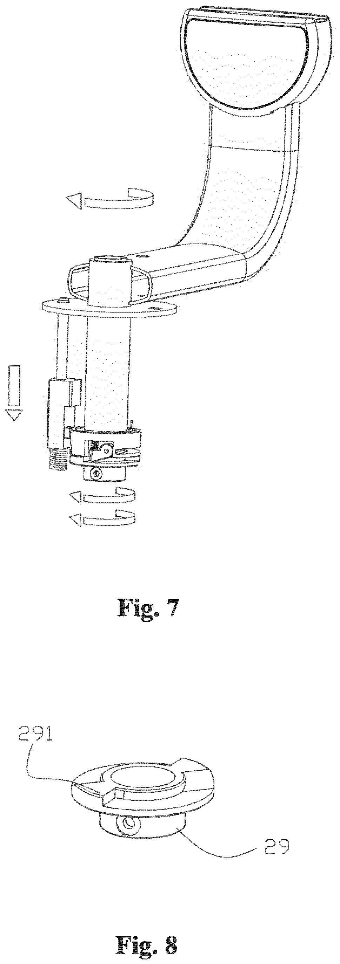

As shown from Fig. 1 to Fig. 7, a mechanical seat reversing structure of a baby stroller comprises a supporting pedestal 22 fixed on a frame 1 of a baby stroller and a supporting stand 5 rotatably connected with the supporting pedestal 22 through a rotating shaft 53. The supporting stand 5 comprises a supporting tube 52 and a fixed base 51. The rotating shaft is mounted in the supporting pedestal 22 through a bearing 34. In the embodiment, the supporting pedestal is specifically arranged on an intermediate tube 21, and the supporting stand may be used for mounting a seat or a bassinet, i.e. The mechanical seat reversing structure of a baby stroller also comprises a locating component for locking the relative position of the supporting pedestal 22 and the supporting stand 5, a release mechanism for releasing the lock of the locating component and a reversing pulling bar 35. The release mechanism comprises a rotor 32 which is sleeved on the rotating shaft and capable of rotating. A trigger portion for triggering the locating component to release the lock is arranged on the rotor 32. A reversing gear 29 is connected with the rotating shaft and is in transmission with the rotor 32 through a ratchet wheel structure. One end of a reversing drawing rope 33 for drawing the rotor 32 to rotate is connected with the rotor 32 and the other end thereof is connected with the reversing pulling bar 35. The invention also comprises a return spring 23 for returning the rotor 32. One section of the reversing drawing rope 33 is wound on a reversing block. The reversing block is provided with a winding groove 322, and one section of the reversing drawing rope 33 is wound in the winding groove 322. A fixed cover 28 is arranged on the bottom of the supporting pedestal.

The rotor 32 is provided with a stopper 30 which is movable and rotates with the rotor 32. One part of the stopper 30 extends in the teeth structure of the reversing gear. A stopper spring 31 for returning the stopper is arranged on the rotor 32. The stopper 30, the stopper spring 31, the teeth structure and the reversing gear make up the ratchet wheel mechanism. A groove is arranged on an outer wall of the rotor 32, the stopper 30 is rotatably connected with a pillar in the groove, and the stopper 30 is in the groove. The teeth structure consists of at least two teeth. In the embodiment, the teeth structure consists of two teeth 291, the rotor 32 is above the reversing gear 29, and the teeth structure is arranged on an upper end face of the reversing gear. Not only the function of a release mechanism, but also the function of a transmission may be realized between the rotor and the reversing gear, integrating multiple functions and being simple in structure. The combined structure of the rotor and the reversing gear is compact in structure and small in volume, is convenient for mounting, and reduces cost.

The locating component comprises locating holes 521, a slider 26, a slider spring 25 for returning the slider and a locating spring 27 for enabling a movable locating pin 24 to get into the locating holes 521. The locating holds 521 are arranged on the supporting stand 5 or an appended structure jointed with the supporting stand 5. The locating pin 24 is provided in the supporting pedestal 22. The slider 26 is provided in a slot of the locating pin 24 and one part of the slider 26 extends from the slot under the effect of the slider spring 25. The position of the slider 26 is corresponding to the trigger portion, that is, when rotating along with the rotor, the trigger portion will touch the slider when passing by it to make the slider move downward, to further make the locating pin move downward. In the embodiment, the locating holes are arranged on the appended structure, and the appended structure is a circular plate 54. The locating pin is located in a guide groove 221 of the supporting pedestal.

The part of the slider 26 extending from the slot is provided with a slope 261, and the trigger portion is provided with a corresponding slope 321. With the use of the two slopes, the trigger portion and the slider may touch with each other easily and smoothly, therefore, the movement of the locating pin is smooth.

There are two locating holes 521. The two locating holes are arranged in a projected circular plane of the rotating shaft in 180 degrees. The amount of the locating holes 521 may be adjusted according to the requirements of design.

### Working principle

When the seat does not need to be rotated (at rest), the locating pin 24 is clamped into the locating hole 521 of the upper supporting tube 52 under the effect of the locating spring 27, so that the upper supporting tube 52 cannot rotate with respect to the supporting pedestal 22. When the seat needs to be rotated, the reversing pulling bar 35 is turned, the rotor 32 is driven to rotate by the reversing drawing rope 33, and under the effect of the slope 321 on the rotor 32, the locating pin 24 moves downward along the guide groove 221 to release from the locating hole 521 of the upper supporting tube 52; the rotor 32 continue rotating, and the stopper 30 on the rotor pushes the teeth structure to drive the reversing gear 29 to rotate together, the reversing gear 29 is fixedly connected with the rotating shaft 53, thereby driving the upper supporting tube 52 to rotate and driving the seat to rotate together; when the upper supporting tube 52 rotates by 180 degrees, the locating pin 24 is clamped into the other locating hole 522 of the upper supporting tube 52 under the effect of the locating spring 27, so that the seat will stop rotating, the seat reversing is realized. At this time, the reversing pulling bar is released, the rotor rotates back under the effect of the return spring, and the reversing drawing rope is wound again to wait for the next reversing operation. During the back-rotation of the rotor, the stopper withdraws inward when touching the teeth of the teeth structure for averting the resistance of the teeth, thereby making the rotor rotate back smoothly. The whole reversing operation is simple, only needing to turn the reversing pulling bar in one direction; automatic locking may be realized after the reversing operation, therefore, the seat can not move any longer, with high safety performance.

The supporting stand may be connected with a baby basket or a baby car seat. The reversing pulling bar 35 may be arranged on a rear wheel bracket 11 or a handlebar 4, which is convenient for operating by hands or feet.

## Claims

1. A mechanical seat reversing structure of a baby stroller, comprising a supporting pedestal (22) fixed on a frame (1) of a baby stroller, a supporting stand (5) rotatably connected with the supporting pedestal (22) through a rotating shaft (53), a locating component for locking the relative position of the supporting pedestal (22) and the supporting stand (5), a release mechanism for releasing the lock of the locating component;
**characterized by**
a reversing pulling bar (35);
the release mechanism comprising a rotor (32) which is sleeved on the rotating shaft (53) and capable of rotating, and a trigger portion for triggering the locating component to release the lock is arranged on the rotor (32);
a reversing gear (29) being connected with the rotating shaft (53) and being in transmission with the rotor (32) through a ratchet wheel structure;
and one end of a reversing drawing rope (33) for drawing the rotor (32) to rotate being connected with the rotor (32) and the other end thereof being connected with the reversing pulling bar (35);
further comprising a return spring (23) for returning the rotor (32) on which one section of the reversing drawing rope (33) is wound.

2. The mechanical seat reversing structure of a baby stroller according to claim 1, wherein the rotor (32) is provided with a stopper (30) which is movable and rotates with the rotor (32), one part of the stopper (30) extends into a teeth structure of the reversing gear (29), a stopper spring (31) for returning the stopper (30) is arranged on the rotor (32), and, the stopper (30), the stopper spring (31), the teeth structure and the reversing gear (29) make up the ratchet wheel mechanism.

3. The mechanical seat reversing structure of a baby stroller according to claim 1 or 2, wherein the locating component comprises locating holes (521), a slider (26), a slider spring (25) for returning the slider (26) and a locating spring (27) for enabling a movable locating pin (24) to get into the locating holes (521); the locating holds (521) are arranged on the supporting stand (5) or an appended structure jointed with the supporting stand (5), the locating pin (24) is provided in the supporting pedestal (22), the slider (26) is provided in a slot of the locating pin (24) and one part of the slider (26) extends from the slot under the effect of the slider spring (25), and the position of the slider (26) is corresponding to the trigger portion; and the locating pin (24) is located in a guide groove (221) of the supporting pedestal (22).

4. The mechanical seat reversing structure of a baby stroller according to claim 3, wherein the part of the slider (26) extending from the slot is provided with a slope (261) and the trigger portion is provided with a corresponding slope (321).

5. The mechanical seat reversing structure of a baby stroller according to claim 3 or 4, wherein there are at least two locating holes (521).

6. The mechanical seat reversing structure of a baby stroller according to claim 2 or one of claims 3 to 5 as far as claims 3 to 5 refer to claim 2, wherein a groove is arranged on an outer wall of the rotor (32), the stopper (30) is rotatably connected with a pillar in the groove, and the stopper (30) is in the groove.

7. The mechanical seat reversing structure of a baby stroller according to claim 2 or one of claims 3 to 6 as far as claims 3 to 6 refer to claim 2, wherein the teeth structure consists of at least two teeth (291).

8. The mechanical seat reversing structure of a baby stroller according to claim 2 or one of claims 3 to 7 as far as claims 3 to 7 refer to claim 2, wherein the rotor (32) is above the reversing gear (29) and the teeth structure is arranged on an upper end face of the reversing gear (29).

9. The mechanical seat reversing structure of a baby stroller according to one of claims 3 to 5 or one of claims 6 to 8 as far as claims 6 to 8 refer to claim 3, wherein the locating holes (521) are arranged on the appended structure and the appended structure is a circular plate (54).

10. The mechanical seat reversing structure of a baby stroller according to one of claims 3 to 5 or one of claims 6 to 9 as far as claims 6 to 9 refer to claim 3, wherein there are at least two locating holes (521), which are provided in a projected circular plane of the rotating shaft (53) in 180 degrees.

## Patentansprüche

1. Eine mechanische Sitzumkehrstruktur für einen Kinderwagen mit einem tragenden Lagerbock (22), der auf einem Rahmen (1) eines Kinderwagens befestigt ist, einem tragenden Gestell (5), das drehbar mit dem tragenden Lagerbock (22) durch eine rotierende Achse (53) verbunden ist, einem Feststell-Bauelement zum Sichern der relativen Position des tragenden Lagerbocks (22) und des tragenden Gestells (5), einen Entriegelungsmechanismus zum Entriegeln der Arretierung des Feststell-Bauteils;
**gekennzeichnet**
**durch** einen Umkehrzugriegel (35);
**dadurch**, dass der Entriegelungsmechanismus einen Rotor (32), der auf die Rotationsachse (53) aufgesteckt ist und imstande ist, zu rotieren und ein Auslöserteil zum Auslösen des Feststell-Bauelements, um die Arretierung zu entriegeln, umfasst, und der Entriegelungsmechanismus auf dem Rotor angeordnet ist;
**durch** einen Wendeantrieb (29), der mit der Rotationsachse (53) verbunden ist und über eine Schaltradkonstruktion den Rotor (32) antreibt;
**dadurch**, dass ein Ende einer Umkehrzugleine (33) zum Ziehen des Rotors (32), um zu rotieren, mit dem Rotor (32) verbunden ist und dessen anderes Ende mit dem Umkehrzugriegel (35) verbunden ist;
**dadurch**, dass ferner eine Rückstellfeder (23) zum Rückstellen des Rotors (32) enthalten ist, auf der ein Abschnitt der Umkehrzugleine (33) gewickelt ist.

2. Die mechanische Sitzumkehrstruktur für einen Kinderwagen gemäß Anspruch 1, wobei der Rotor (32) mit einem Anschlag (30) versehen ist, der beweglich ist und mit dem Rotor (32) rotiert, wobei ein Teil des Anschlags (30) in eine Zahnkonstruktion des Wendeantriebs (29) hineinragt, wobei eine Anschlagfeder (31) zum Zurückholen des Anschlags (30) auf dem Rotor (32) angeordnet ist und der Anschlag (30), die Anschlagfeder (31), die Zahnkonstruktion und der Wendeantrieb (29) den Schaltradmechanismus bilden.

3. Die mechanische Sitzumkehrstruktur für einen Kinderwagen gemäß Anspruch 1 oder 2, wobei das Feststell-Bauelement Feststelllöcher (521), einen Schieber (26), eine Schieberfeder (25) zum Rückholen des Schiebers (26) und eine Feststellfeder (27), um es einer beweglichen Feststellnadel (24) zu ermöglichen, in die Feststelllöcher (521) einzutreten, umfasst; wobei die Feststelllöcher (521) auf dem tragenden Gestell (5) oder auf einer angehängten Konstruktion, die mit dem tragenden Gestell (5) befestigt ist, angeordnet sind, wobei die Feststellnadel (24) in dem tragenden Lagerbock (22) vorgesehen ist und der Schieber (26) in einem Schlitz der Feststellnadel (24) vorgesehen ist und ein Teil des Schiebers (26) aus dem Schlitz unter dem Einfluss der Schieberfeder (25) herausragt und die Position des Schiebers (26) dem Auslöseteil entspricht; und die Feststellfeder (24) sich in einer Führungsnut (221) des tragenden Lagerbocks (22) befindet.

4. Die mechanische Sitzumkehrstruktur für einen Kinderwagen gemäß Anspruch 3, wobei der Teil des Schiebers (26), der aus dem Schlitz herausragt eine Neigung (261) aufweist und der Auslöseteil eine entsprechende Neigung (321) aufweist.

5. Die mechanische Sitzumkehrstruktur für einen Kinderwagen gemäß Anspruch 3 oder 4, wobei es mindestens zwei Feststelllöcher (521) gibt.

6. Die mechanische Sitzumkehrstruktur für einen Kinderwagen gemäß Anspruch 2 oder einem der Ansprüche 3 bis 5, soweit Ansprüche 3 bis 5 sich auf Anspruch 2 beziehen, wobei eine Nut auf einer Außenwand des Rotors (32) angeordnet ist, wobei der Anschlag (30) drehbar mit einem Holm in der Nut verbunden ist und sich der Anschlag (30) in der Nut befindet.

7. Die mechanische Sitzumkehrstruktur für einen Kinderwagen gemäß Anspruch 2 oder einem der Ansprüche 3 bis 6, soweit Ansprüche 3 bis 6 sich auf Anspruch 2 beziehen, wobei die Zahnkonstruktion aus mindestens zwei Zähnen (291) besteht.

8. Die mechanische Sitzumkehrstruktur für einen Kinderwagen gemäß Anspruch 2 oder einem der Ansprüche 3 bis 7, soweit Ansprüche 3 bis 7 sich auf Anspruch 2 beziehen, wobei sich der Rotor (32) über dem Wendeantrieb (29) befindet und die Zahnkonstruktion auf einer oberen Endfläche des Wendeantriebs (29) angeordnet ist.

9. Die mechanische Sitzumkehrstruktur für einen Kinderwagen gemäß einem der Ansprüche 3 bis 5 oder einem der Ansprüche 6 bis 8, soweit Ansprüche 6 bis 8 sich auf Anspruch 3 beziehen, wobei die Feststelllöcher (521) auf der angehängten Konstruktion angeordnet sind und die angehängte Konstruktion eine runde Platte (54) ist.

10. Die mechanische Sitzumkehrstruktur für einen Kinderwagen gemäß einem der Ansprüche 3 bis 5 oder einem der Ansprüche 6 bis 9, soweit Ansprüche 6 bis 9 sich auf Anspruch 3 beziehen, wobei es mindestens zwei Feststelllöcher (521) gibt, die in einer hervorstehenden runden Fläche auf der rotierenden Achse (53) in 180 Grad vorgesehen ist.

## Revendications

1. Structure mécanique de retournement de siège de poussette d'enfant, comprenant un socle de support (22) fixé sur un cadre (1) de poussette d'enfant, une sellette de support (5) reliée de façon pivotante au socle de support (22) à travers un arbre pivotant (53), un composant de positionnement pour verrouiller la position relative du socle de support (22) et la sellette de support (5), un mécanisme de libération pour libérer le verrou du composant de positionnement ;
**caractérisé par** :
une barre de traction de retournement (35) ;
le mécanisme de libération comprenant un rotor (32) chemisé sur l'arbre pivotant (53) et capable de tourner et une partie de gâchette pour déclencher le composant de positionnement pour libérer le verrou étant agencé sur le rotor (32) ;
un engrenage de retournement (29) étant relié à l'arbre pivotant (53) et en transmission avec le rotor (32) à travers une structure de roue à rochet ;
et une extrémité de câble de traction de retournement (33) pour tirer le rotor (32) afin de le faire tourner étant reliée au rotor (32) et l'autre extrémité correspondante étant reliée à la barre de traction de retournement (35) ;
comprenant en outre un ressort de rappel (23) pour retourner le rotor (32) sur lequel une section du câble de traction de retournement (33) est enroulée.

2. Structure mécanique de retournement de siège de poussette d'enfant selon la revendication 1, dans laquelle le rotor (32) est pourvu d'un obturateur (30) qui est mobile et tourne avec le rotor (32), une partie de l'obturateur (30) s'étendant dans une structure dentée de l'engrenage de retournement (29), un ressort d'obturateur (31) pour retourner l'obturateur (30) étant agencé sur le rotor (32), et l'obturateur (30), le ressort d'obturateur (31), la structure dentée et l'engrenage de retournement (29) réalisant le mécanisme de roue à rochet.

3. Structure mécanique de retournement de siège de poussette d'enfant selon la revendication 1 ou 2, dans laquelle le composant de positionnement comprend des trous de positionnement (521), un coulisseau (26), un ressort de coulisseau (25) pour retourner le coulisseau (26) et un ressort de positionnement (27) pour permettre à une broche de positionnement mobile (24) d'aller dans les trous de positionnement (521); les trous de positionnement (521) sont agencés sur la sellette de support (5) ou une structure annexée jointe à la sellette de support (5), la broche de positionnement (24) étant prévue dans le socle de support (22), le coulisseau (26) étant prévu dans une fente de la broche de positionnement (24) et une partie du coulisseau (26) s'étendant hors de la fente sous l'effet du ressort de coulisseau (25) et la position du coulisseau (26) correspondant à la partie de gâchette ; et la broche de positionnement (24) étant positionnée dans une rainure de guidage (221) du socle de support (22).

4. Structure mécanique de retournement de siège de poussette d'enfant selon la revendication 3, dans laquelle la partie du coulisseau (26) s'étendant hors de la fente est pourvue d'une pente (261) et la partie de gâchette est pourvue d'une pente (321) correspondante.

5. Structure mécanique de retournement de siège de poussette d'enfant selon la revendication 3 ou 4, dans laquelle se trouvent au moins deux trous de positionnement (521).

6. Structure mécanique de retournement de siège de poussette d'enfant selon la revendication 2 ou l'une quelconque des revendications 3 à 5 dans la mesure où ces revendications 3 à 5 se réfèrent à la revendication 2, dans laquelle une rainure est agencée sur une paroi extérieure du rotor (32), l'obturateur (30) étant relié de façon pivotante à un pilier dans la rainure et l'obturateur (30) étant dans la rainure.

7. Structure mécanique de retournement de siège de poussette d'enfant selon la revendication 2 ou l'une quelconque des revendications 3 à 6 dans la mesure où ces revendications 3 à 6 se réfèrent à la revendication 2, dans laquelle la structure dentée se compose d'au moins deux dents (291).

8. Structure mécanique de retournement de siège de poussette d'enfant selon la revendication 2 ou l'une quelconque des revendications 3 à 7 dans la mesure où ces revendications 3 à 7 se réfèrent à la revendication 2, dans laquelle le rotor (32) est au-dessus de l'engrenage de retournement (29) et la structure dentée est agencée sur une face d'extrémité supérieure de l'engrenage de retournement (29).

9. Structure mécanique de retournement de siège de poussette d'enfant selon l'une quelconque des revendications 3 à 5 ou l'une quelconque des revendications 6 à 8 dans la mesure où ces revendications 6 à 8 se réfèrent à la revendication 3, dans laquelle les trous de positionnement (521) sont agencés sur la structure annexée et la structure annexée est une plaque circulaire (54).

10. Structure mécanique de retournement de siège de poussette d'enfant selon l'une quelconque des revendications 3 à 5 ou l'une quelconque des revendications 6 à 9 dans la mesure où ces revendications 6 à 9 se réfèrent à la revendication 3, dans laquelle on a au moins deux trous de positionnement (521) prévus dans un plan circulaire projeté de l'arbre pivotant (53) de 180 degrés.
